# DEMANDE DE BREVET EUROPEEN

(11) **EP 1 216 777 A1**
(43) Date de publication de la demande: **26.06.2002**
(21) Numéro de dépôt: 00870326.6
(22) Date de dépôt: 22.12.2000
(51) Int. Cl.: B23D 61/18

(54) **Scie à câble comportant des ressorts à diamètre variable entre les éléments coupants**

(71) Demandeur: DIAMANT BOART, 1190 Forest-Bruxelles (BE)
(72) Inventeur: Heine, Xavier, 1180 Bruxelles (BE)
(74) Mandataire: Claeys, Pierre

(57) **Abrégé**

Scie à câble, comportant un câble porteur (2), des éléments coupants (3) enfilés sur le câble (2) et définissant un axe longitudinal (3A) de la scie à câble (1), des ressorts (4) enfilés sur le câble (2) chaque fois entre deux éléments coupants (3) successifs, et une matière de protection (5) enrobant au moins le câble (2) et les ressorts (4) entre les éléments coupants (3), et injectée à cet effet dans un moule disposé temporairement autour des composants de la scie à câble (1), dans laquelle, pour au moins un ressort (4), le diamètre extérieur est variable sur sa longueur, et une partie (8) à plus grand diamètre extérieur est agencée pour prendre appui contre l'intérieur du moule en vue de s'y positionner coaxialement avec l'axe longitudinal (3A), une partie (9) à plus petit diamètre extérieur est agencée pour prendre appui sur le câble porteur (2).

## Description

La présente invention se rapporte à une scie à câble, comportant un câble porteur, des éléments coupants enfilés sur le câble, des ressorts enfilés sur le câble chaque fois entre deux éléments coupants successifs, et une matière enrobant au moins le câble et les ressorts entre les éléments coupants, et injectée à cet effet dans un moule disposé temporairement autour des composants du câble.

Les éléments coupants, généralement d'allure cylindrique, sont alignés suivant un axe longitudinal théorique. Ils contiennent des particules abrasives, telles que des grains de diamant mélangés ou non à des carbures ou à d'autres composants durs. Le câble porteur est composé d'un ou de plusieurs torons. La matière d'enrobage sert à rendre mécaniquement solidaires le câble, les ressorts et les éléments coupants disposés usuellement à intervalles bien déterminés. Cette matière peut être un élastomère thermoplastique ou thermodurcissable mis en oeuvre par moulage ou injection entre et autour des composants concernés pour former un manchon ou gaine.

L'élastomère a aussi d'autres fonctions telles que de protéger le câble porteur contre des particules abrasives et autres libérées lors du sciage.

Dans certaines applications de découpe de matériaux durs (comme par exemple le sciage de pierre naturelle en carrière, le sciage de béton armé, ou la découpe d'éléments en acier), l'ensemble de la scie à câble est beaucoup plus sollicité qu'en d'autres circonstances. En effet:
- un arrosage nécessaire, mais moins aisé à contrôler, est parfois déficient ou inexistant, ce qui provoque la surchauffe de l'élastomère et la dégradation de celui-ci,
- il faut souvent scier des surfaces anguleuses, et les éléments coupants peuvent recevoir de grands chocs (volume de copeaux par éléments coupants, non limité en cas de vibrations) et le câble peut être rapidement détruit,
- les vitesses de sciage y sont parfois trop élevées,
- les conditions de pilotage de la machine d'entraînement de la scie à câble sont assez précaires, et les mouvements des organes de la machine sont moins bien contrôlés.

Comme dans ces conditions l'élastomère finit par se dégrader, il ne maintient plus les éléments coupants en place, ce qui a pour conséquence de fréquentes ruptures du câble ou un tassement des éléments coupants le long du câble avec gonflement des gaines ou manchons élastiques écrasés, ceci risquant de bloquer le câble dans le trait de scie. Pour améliorer les performances de l'ensemble de la scie à câble, la gaine élastique se trouvant entre deux éléments coupants a été renforcée par un ressort. L'élastomère vient alors enrober tous les éléments constitutifs de la scie, y compris les ressorts, ceux-ci renforçant la gaine élastique par frettage et permettant ainsi d'éviter son gonflement sous l'effort.

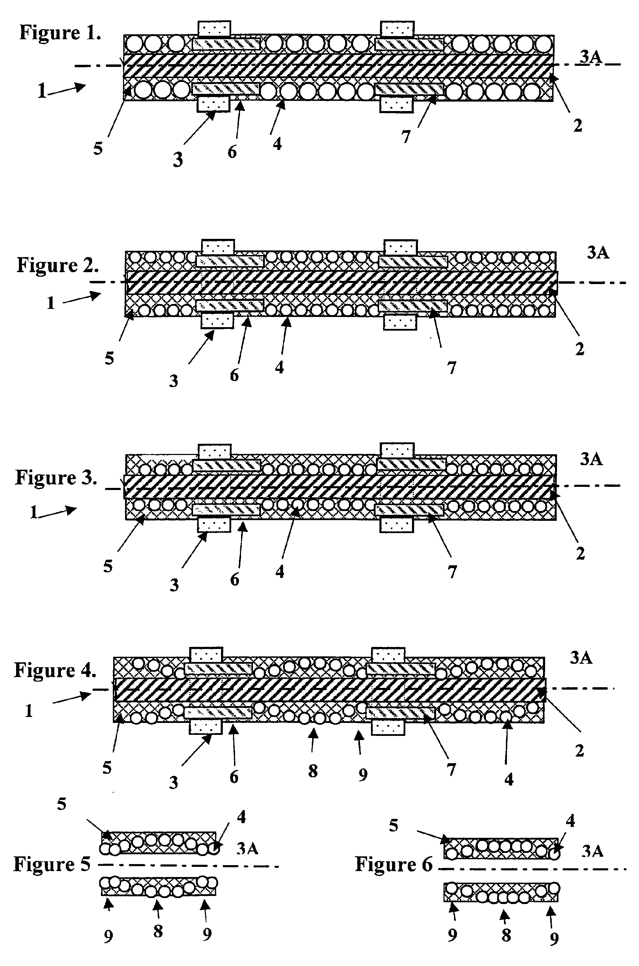

Les ressorts utilisés jusqu'à présent sont cylindriques et principalement caractérisés par le diamètre de leur fil, leur diamètre intérieur, les nombre de spires, pas et longueur libre. Si le ressort cylindrique améliore la résistance axiale du montage en valeur de crête d'effort de travail, il induit aussi, lors du montage du câble de sciage, des points négatifs tels que décrits ci-après :
- avec un gros diamètre du fil du ressort, on arrive à mieux positionner celui-ci entre le câble porteur et la paroi intérieure du moule (figure 1), mais la quantité de matière élastique enrobant les éléments du câble diminue dangereusement, et la résistance de l'ensemble à la fatigue diminue sous les flexions répétées à faible rayon de courbure. De plus, la rigidité du câble augmente,
- avec un diamètre réduit du fil du ressort (figures 2 et 3), on peut augmenter la quantité de matière élastique mais on accentue dangereusement le problème de décentrement du câble porteur et/ou du ressort dans le moule lors du moulage ou injection. Soit le ressort prend appui sur la paroi intérieure du moule (figure 2) soit il s'appuie sur le câble (figure 3) soit encore il flotte entre le câble et le moule, donc il n'est pas positionné par rapport au câble porteur. Ceci a pour conséquence de favoriser l'ovalisation des éléments coupants (usure non cylindrique),
- avec un gros fil de ressort et un nombre réduit de spires, on augmente la quantité de matière élastique mais, en même temps, la rigidité du câble augmente dangereusement et l'effet du ressort s'amenuise (le frettage de la matière élastique diminue).

Donc, même lorsqu'on organise, lors de la fabrication, un surmoulage des ressorts, il faut souvent prévoir, en cours d'utilisation, un reconditionnement très coûteux et très problématique pour les utilisateurs de la scie à câble.

La présente invention a pour but de remédier à ces inconvénients et de procurer une scie à câble dans laquelle soit assurée une disposition coaxiale réciproque la meilleure possible des divers éléments constituants. L'invention propose que, sans augmenter le diamètre du fil du ressort, celui-ci soit façonné de manière à ce qu'il prenne appui tant sur le câble que sur la paroi intérieure du moule.

A cet effet, suivant l'invention, pour au moins un ressort, le diamètre extérieur est variable sur sa longueur, et une partie à plus grand diamètre extérieur est agencée pour prendre appui contre l'intérieur du moule en vue de s'y positionner coaxialement à l'axe longitudinal théorique, tandis qu'une partie à plus petit diamètre extérieur est agencée pour prendre appui sur le câble porteur.

L'appui mentionné peut être direct entre câble et ressort et/ou entre moule et ressort, leurs diamètres intérieurs ou respectivement extérieurs étant égaux. L'appui peut aussi être indirect, obtenu après injection de la matière d'enrobage, un jeu étant prévu entre eux pour que celle-ci puisse s'y infiltrer en vue de les enrober en tout point pour leurs protections.

L'invention porte ainsi sur une géométrie du ressort qui permet d'éviter les inconvénients décrits ci-dessus :
- en assurant une épaisseur suffisante de matière d'enrobage, éventuellement jusque sur le support de l'élément coupant pour une meilleure fixation de celui-ci, et pour garantir une meilleure étanchéité aux boues de sciage,
- en maîtrisant correctement le centrage du câble porteur et du ressort par rapport aux éléments coupants lors du moulage ou de l'injection, pour obtenir en service une usure cylindrique des éléments coupants et augmenter ainsi la durée de vie du câble.

D'autres détails et particularités de l'invention ressortiront des revendications secondaires et de la description des dessins qui sont annexés au présent mémoire et qui illustrent, à titre d'exemples non limitatifs, des formes de réalisation particulières de le scie à câble suivant l'invention.

Les figures 1 à 3 montrent en coupe axiale trois formes de réalisation de l'état antérieur de la technique, à savoir respectivement un cas à diamètre de fil choisi pour que le ressort soit en contact avec le câble aussi bien qu'avec la paroi intérieure du moule, et deux cas à diamètre de fil réduit, dans l'un le ressort ayant un diamètre extérieur choisi pour être en contact de positionnement avec la paroi du moule et, dans l'autre cas, le diamètre extérieur du ressort dépendant de son diamètre intérieur choisi pour un contact de positionnement avec le câble porteur.

Les figures 4 à 6 montrent en coupe axiale trois formes de réalisation du câble suivant l'invention.

Dans les différentes figures, les mêmes notations de référence désignent des éléments identiques ou analogues.

L'invention concerne donc une scie à câble 1 comportant un câble porteur 2, des éléments coupants 3, généralement cylindriques, enfilés sur le câble porteur 2 ainsi que des ressorts 4 enfilés aussi sur le câble 2, usuellement chaque fois entre deux éléments coupants successifs. Une matière de protection 5 enrobe au moins le câble 2 et les ressorts 4 situés entre les éléments coupants 3, et est par exemple injectée à cet effet dans un moule (non représenté) disposé temporairement autour des composants de la scie à câble 1. Les éléments coupants 3 sont alignés dans le moule suivant un axe longitudinal théorique 3A.

Suivant l'invention, pour au moins un ressort 4 et logiquement pour chaque ressort 4, le diamètre extérieur est variable sur la longueur du ressort 4. Une partie 8, du ressort 4, à plus grand diamètre extérieur est agencée pour prendre appui contre l'intérieur du moule en vue de s'y positionner suivant l'axe 3A. Une autre partie 9, du ressort 4, à plus petit diamètre extérieur est agencée pour prendre appui sur le câble porteur 2.

Le moule comportant déjà des encoches de positionnement pour les éléments coupants 3, il apparaît que, puisque le moule positionne correctement les uns par rapport aux autres ces éléments coupants 3 et les ressorts 4 et que ceux-ci positionnent de leur côté le câble porteur 2, on ne peut qu'obtenir une excellente position coaxiale de tous les composants de la scie à câble 1, même lorsqu'on prévoit un jeu entre le câble porteur 2 et le trou de passage dans l'élément coupant 3 pour que la matière d'enrobage 5 s'y infiltre pour leur liaison mécanique.

Une géométrie adéquate du ressort 4 avec agencement des spires selon la figure 4 permet de concilier les 3 critères : étanchéité, recouvrement du support 7 et centrage. En effet, le ressort 4 à diamètre extérieur variable apporte les fonctions et les avantages suivants (figure 4).

De préférence, les spires au milieu du ressort 4 ont le diamètre extérieur proche du diamètre intérieur du moule de façon à ce que le ressort 4 se centre par rapport au moule d'injection et aux éléments coupants 3. Les spires aux extrémités du ressort 4 ont alors un diamètre intérieur proche de celui du câble porteur 2 et permettent donc de centrer celui-ci par rapport au moule et aux éléments coupants 3.

Du fait du centrage automatique, suivant l'invention, du ressort 4 et du câble porteur 2, on peut réduire le diamètre du fil du ressort 4, ce qui signifie plus de souplesse pour la scie à câble 1, mais aussi un meilleur enrobage des spires, une épaisseur plus importante d'élastomère aux extrémités du ressort 4, et enfin, une meilleure continuité de la matière élastique 5 de l'enrobage entre les éléments coupants 3 vers et sur la partie débordante 6, autour du support 7 compris dans l'élément coupant 3.

Au moins une des extrémités d'un ressort 4 susdit peut présenter un diamètre extérieur réduit, et être agencée notamment pour être vissée dans un élément coupant 3, en particulier dans son support 7.

Le nombre de spires du ressort 4 de l'invention est déterminé de façon à laisser suffisamment de matière entre les spires, mais en sachant qu'en augmentant le nombre de spires, on diminue aussi la rigidité de la scie à câble 1. Les spires peuvent être jointives en certaines zones du ressort 4 (exemples : figure 5 aux extrémités, et figure 6 au milieu).

Bien sûr, le ressort 4 précité peut aussi être réalisé par une combinaison (non représentée) de plusieurs ressorts de diamètres différents, chacun étant cependant cylindrique. Ils peuvent être simplement mis bout à bout pour réaliser un ressort 4 à diamètre variable ou alors être vissés l'un dans l'autre pour être solidaires.

Le câble porteur 2 utilisé pour l'invention est soit un câble en acier, soit un câble composite en acier avec une âme en fibres synthétiques, soit un câble en fibres synthétiques. Le câble porteur 2 peut aussi être préalablement enduit d'une matière élastique, notamment pour sa protection ou pour favoriser l'accrochage de la matière d'enrobage 5. Cela peut être aussi le cas pour les ressorts 4. Il va de soi que dans ces cas, les diamètres considérés sont ceux comprenant la couche ainsi enduite.

Il doit être entendu que l'invention n'est nullement limitée aux formes de réalisation décrites et que bien des modifications peuvent être apportées à ces dernières sans sortir du cadre des revendications.

Généralement, le sens du boudinage des ressorts 4 est identique au sens de câblage du câble porteur 2 à structure " parallèle ou Lang " ou bien " croisée ". Par exemple, les ressorts 4 sont boudinés à droite et le câble porteur est câblé à droite. Cependant, l'invention concerne aussi le cas où le sens de boudinage du ressort 4 est contraire au sens de câblage du câble porteur 2 à structure " parallèle " ou " croisée ".

## Revendications

1. Scie à câble, comportant
- un câble porteur (2),
- des éléments coupants (3) enfilés sur le câble (2), et définissant un axe longitudinal (3A) de la scie à câble (1),
- des ressorts (4) enfilés sur le câble (2) chaque fois entre deux éléments coupants (3) successifs, et
- une matière de protection (5) enrobant au moins le câble (2) et les ressorts (4) entre les éléments coupants (3), et injectée à cet effet dans un moule disposé temporairement autour des composants de la scie à câble (1),
***caractérisée en ce que,*** pour au moins un ressort (4) :
- le diamètre extérieur est variable sur sa longueur, et
- une partie (8) à plus grand diamètre extérieur est agencée pour prendre appui contre l'intérieur du moule en vue de s'y positionner coaxialement avec l'axe longitudinal (3A),
- une partie (9) à plus petit diamètre extérieur est agencée pour prendre appui sur le câble porteur (2).

2. Scie à câble suivant la revendication 1, **caractérisée en ce que** la partie (8) à plus grand diamètre est située environ au milieu de la longueur du ressort (4).

3. Scie à câble suivant l'une ou l'autre des revendications 1 et 2, **caractérisée en ce qu'**au moins une des extrémités d'un ressort (4) susdit présente un diamètre extérieur réduit, et est agencée notamment pour être vissée dans un élément coupant (3).

4. Scie à câble suivant l'une quelconque des revendications 1 à 3, **caractérisée en ce qu'**une partie des spires du ressort (4) sont jointives.

5. Scie à câble suivant l'une quelconque des revendications 1 à 4, **caractérisée en ce que**, préalablement à leur montage, le ressort (4) et/ou le câble (2) peuvent être recouverts d'un revêtement.
